(19) Europäisches Patentamt

European Patent Office

Office européen des brevets

(11) **EP 1 264 729 B1**

(12) **EUROPÄISCHE PATENTSCHRIFT**

(45) Veröffentlichungstag und Bekanntmachung des Hinweises auf die Patenterteilung:
**15.09.2004   Patentblatt 2004/38**

(51) Int Cl.⁷: **B60P 1/00**, G01G 19/12, B60G 17/015, B60G 11/46

(21) Anmeldenummer: **02012225.5**

(22) Anmeldetag: **04.06.2002**

(54) **Verfahren zur Feststellung der Gewichtsbelastung einer gegenüber dem Fahrzeugaufbau gefederten, luftbereiften Fahrzeugachse**

Method for determining the axle load of a vehicle

Méthode de détermination de la charge à l'essieu d'un véhicule

(84) Benannte Vertragsstaaten:
**DE ES FR GB IT**

(30) Priorität: **06.06.2001   DE 10127567**

(43) Veröffentlichungstag der Anmeldung:
**11.12.2002   Patentblatt 2002/50**

(73) Patentinhaber: **BPW Bergische Achsen Kommanditgesellschaft**
**51674 Wiehl (DE)**

(72) Erfinder: **Ebert, Jörg, Dr.**
**50858 Köln (DE)**

(74) Vertreter: **Christophersen, Ruth**
**Christophersen & Partner**
**Patentanwälte**
**Feldstrasse 73**
**40479 Düsseldorf (DE)**

(56) Entgegenhaltungen:
**DE-A- 3 526 242**   **DE-A- 19 741 451**
**DE-A- 19 922 505**   **US-A- 6 055 471**
**US-B1- 6 209 887**

**Beschreibung**

Die Erfindung betrifft ein Verfahren zur Feststellung der Gewichtsbelastung einer gegenüber dem Fahrzeugaufbau gefederten, luftbereiften Fahrzeugachse unter Verwendung eines Sensors, aus dessen Signal das auf der Fahrzeugachse lastende Gewicht rechnerisch ableitbar ist.

Im Stand der Technik ist es bei Fahrzeugen mit Luftfederung bekannt, das Gewicht des Fahrzeugaufbau einschließlich einer etwaigen Fahrzeugladung aus der Größe des Luftdrucks in den Luftfederbälgen zu ermitteln. Hierzu kommen Drucksensoren zur Anwendung, welche den Luftdruck in den Luftfederbälgen erfassen. Derartige Balgdruckmessungen sind aufwendig und machen zusätzliche Druckaufnehmer im Fahrzeug erforderlich.

Aus der DE-A-19 922 505 ist eine Wiegeeinrichtung für Ladegut eines gasgegederten Transport-Fahrzeuges bekannt.

Der Erfindung liegt die **Aufgabe** zugrunde, ein Verfahren zur Feststellung der Gewichtsbelastung einer Fahrzeugachse zu entwickeln, mit dem sich die Nachteile bei den zum Stand der Technik gehörenden Verfahren vermeiden lassen.

Zur **Lösung** wird bei einem Verfahren der eingangs genannten Art vorgeschlagen, daß der Sensor mit der Fahrzeugachse verbunden ist und ein Geschwindigkeits- und/oder Beschleunigungssignal vertikal zur Fahrbahn erfaßt, aus dem bei gemessener Schwingungsfrequenz der Fahrzeugachse mit der Winkelgeschwindigkeit $\omega$ die auf der Achse lastende Masse $m_2$ des Fahrzeugaufbaus einschließlich der Ladung nach der Formel

$$m_2 = \frac{c_R \bullet c_{L,B} - m_1 \bullet \omega^2 \bullet c_{L,B}}{\omega^2(c_R + c_{L,B}) - m_1 \bullet \omega^4}$$

berechnet wird, worin bedeuten:

$m_2$     Achslast in kg

$m_1$     Masse in kg von Fahrzeugachse einschließlich fest damit verbundener Teile

$\omega$     Winkelgeschwindigkeit $2\pi f$ in 1/s des Schwingungserregers

$c_R$     Federkraft in N/mm der Luftbereifung

$c_{L,B}$     Federkraft in N/mm der Fahrzeugfederung zwischen Fahrzeugaufbau und Fahrzeugachse.

Erfindungsgemäß wird daher durch Schwingungserregung das Mehrkomponentensystem bestehend aus der Fahrzeugachse und der darauf ruhenden Masse des Fahrzeugaufbaus in Schwingungen versetzt, und es werden sodann aus dem Zeit- und Frequenzverlauf der dynamischen Weginformation die einschlägigen Systemgrößen bestimmt. Diese Systemgrößen sind bei einem Kalibriervorgang, bei dem der Fahrzeugaufbau noch nicht beladen ist, die Steifigkeit, die Dämpfung und die Masse. In dem so kalibrierten System wird bei beladenem Fahrzeug die zugeladene Masse bestimmt.

Gemäß einer bevorzugten Ausgestaltung des Verfahrens erfolgt die Schwingungserregung durch eine Zwangserregung, nämlich durch eine an der Fahrzeugachse oder einem damit fest verbundenen Teil rotierende Erregermasse. Diese setzt die Fahrzeugachse einschließlich der fest damit verbundenen und damit mitfedernden Teile des Fahrwerkes in eine Schwingung mit der Winkelgeschwindigkeit $\omega$, und generiert damit nicht nur eine gleichförmige Schwingungsbewegung des Achssystems, sondern zugleich eine Reaktionsschwingung von Fahrzeugaufbau und gegebenenfalls Ladung. Aus diesen Größen und zusätzlich den vorgegebenen Systemgrößen läßt sich dann die Gesamtmasse $m_2$ von Fahrzeugaufbau einschließlich Ladung ermitteln.

Weitere Einzelheiten werden nachfolgend anhand der zugehörigen Zeichnungen erläutert. Darin zeigen:

Fig. 1     in perspektivischer Ansicht verschiedene Teile eines Fahrwerkes einschließlich einer luftgefederten Fahrzeugachse, an der ein luftbereiftes Rad drehbar gelagert ist,

Fig. 2     das System nach Fig. 1 in abstrahierter, physikalischer Darstellung als Schwingungserreger-System mit einem Zwei- Massen- Schwinger.

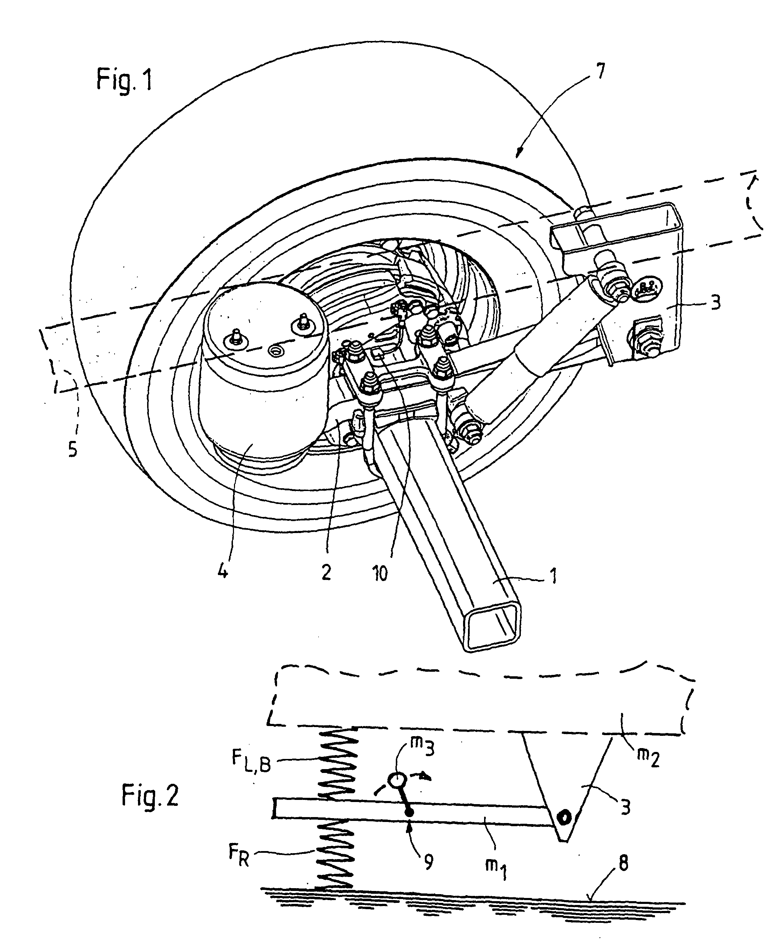

Fig. 1 zeigt in Übersichtsdarstellung u.a. eine Fahrzeugachse 1, vorzugsweise die Achse eines Anhängers oder eines Aufliegers für einen Schwerlast-Lkw. Die Fahrzeugachse 1 ist im Bereich ihrer beiden Enden mit Längslenkern 2 verbunden. Mit ihrem in Fahrzeugrichtung vorderen Ende sind die Längslenker 2 an einer Stütze 3 gelagert. Die Stütze 3 ist Bestandteil des Fahrzeugchassis und damit letztendlich auch des Fahrzeugaufbaus. Mit ihrem in Fahrtrichtung hinteren Ende stützt sich jeder Längslenker 2 über eine Luftfeder 4 gegenüber dem Rahmen 5 des Fahrzeugaufbaus ab.

An den Enden läuft die Fahrzeugachse 1 in Achsschenkeln aus, auf denen über Wälzlager die Räder 7 des Fahrzeuganhängers gelagert sind. Die Räder 7 sind üblicherweise luftbereift und üben damit ein gewisses eigenes Federungsverhalten (Feder $F_R$) aus, dessen Federkraft $C_R$ u.a. durch den Luftdruck in den Reifen bedingt ist.

Werden die konstruktiven Elemente gemäß Fig. 1 abstrahiert, so ergibt sich das in Fig. 2 physikalisch dargestellte Feder- Massen- System. Die Masse $m_2$ ist die Achslast aus dem Gewicht des Fahrzeugaufbaus einschließlich der etwaigen Ladung. Die Masse $m_1$ ist die Masse der Achskonstruktion, bestehend aus der eigentlichen Fahrzeugachse 1 und den fest damit verbundenen Teilen wie z. B. den Längslenkern 2, den daran befestigten Anteilen der Luftfeder 4, der Bremsanlage und der Felge des Fahrzeugrades 7. Zwischen den Massen $m_1$ und $m_2$ befindet sich die Feder $F_{L,B}$. Hierbei handelt es sich praktisch um die Luftfeder 4. Zwischen der Masse $m_1$ und der Fahrbahn 8 befindet sich die Feder $F_R$. Diese Feder gibt das Eigenfederungsverhalten des luftbereiften Fahrzeugrades 7 wieder. Wenn in diesem Zusammenhang von einer Luftbereifung die Rede ist, so soll dies selbstverständlich nicht ausschließen, daß der Fahrzeugreifen mit einem anderen Gas als Luft gefüllt ist, z. B. dem inzwischen weitverbreiteten Stickstoff als Füllgas.

Die Federung $F_{L,B}$ weist die Federkraft bzw. Federkonstante $c_{L,B}$, die Feder $F_R$ die Federkraft bzw. Federkonstante $c_R$ auf, jeweils in der Einheit N/mm.

Gemäß Fig. 2 ist an der Masse $m_1$ und hier vorzugsweise entweder an der Fahrzeugachse oder dem Längslenker ein Schwingungserreger 9 befestigt. Dies kann z. B. eine mittels eines Elektromotors rotierbare Masse $m_3$ sein.

Vorgesehen ist ferner, wie dies Fig. 1 erkennen läßt, ein an der Fahrzeugachse 1 befestigter Sensor 10. Der Sensor 10 ist vorzugsweise ein Piezoaufnehmer und erfaßt das vertikal zur Fahrbahn 8 wirkende zeitabhängige Geschwindigkeitssignal bzw. Beschleunigungssignal. Das Geschwindigkeits- und/oder Beschleunigungssignal gelangt über ein flexibles Kabel an eine zentrale Rechen- oder Steuereinheit, in der die im nachfolgenden erläuterten Berechnungen zur Gesamtmasse aus Fahrzeugaufbau und Ladung durchgeführt werden. Der hieraus ermittelte Wert läßt sich an den Instrumenten vorzugsweise des Zugfahrzeuges anzeigen.

Bei der Durchführung des Verfahrens ist zunächst eine Kalibrierung vorzunehmen. Hierbei wird das unbeladene und vorzugsweise stillstehende Fahrzeug direkt oder indirekt in Schwingungen versetzt. Zur indirekten Schwingungserzeugung wird die Masse $m_1$ mittels des Schwingungserregers 9 mit der Erregermasse $m_3$ in gleichmäßige Schwingungen mit der Winkelgeschwindigkeit $\omega$ versetzt. Diese Schwingungen induzieren in dem Feder- Masse- System eine Schwingung auch der Masse $m_2$, d. h. des unbeladenen Fahrzeugaufbaus. Unter Verwendung der Formel

$$m_2 = \frac{c_R \bullet c_{L,B} - m_1 \bullet \omega^2 \bullet c_{L,B}}{\omega^2 (c_R + c_{L,B}) - m_1 \bullet \omega^4}$$

erfolgt eine Kalibrierung der ladungsunabhängigen Systemgrößen, wobei in dieser Formel bedeuten:

$m_2$     Achslast in kg

$m_1$     Masse in kg von Fahrzeugachse einschließlich fest damit verbundener Teile

$\omega$     Winkelgeschwindigkeit $2\pi f$ in 1/s des Schwingungserregers

$c_R$     Federkraft in N/mm der Luftbereifung

$c_{L,B}$     Federkraft in N/mm der Fahrzeugfederung zwischen Fahrzeugaufbau und Fahrzeugachse.

Nachdem dieser Kalibriervorgang abgeschlossen ist, stehen sämtliche ladungsunabhängigen Systemgrößen fest. Es läßt sich sodann bei beladenem Fahrzeug die Gesamtmasse $m_2$ des Fahrzeugaufbaus einschließlich der Ladung ebenfalls nach der obigen Formel errechnen. Auf diese Weise läßt sich feststellen, daß das Fahrzeug nicht die vom Gesetzgeber vorgeschriebenen Gewichtsgrenzen überschreitet.

Vorzugsweise befinden sich Sensoren 10 im Bereich beider Enden der Fahrzeugachse. Durch Vergleich der beiden Werte für die ermittelte Achslast bzw. dem jeweiligen Achslastanteil läßt sich feststellen, ob in einem der Fahrzeugreifen ein Druckverlust eingetreten ist. Außerdem läßt sich auf diese Weise feststellen, ob sich die Ladung auf der Ladefläche während der Fahrt seitlich verschoben hat.

### Bezugszeichenliste

| | |
|---|---|
| 1 | Fahrzeugachse |
| 2 | Längslenker |
| 3 | Stütze |
| 4 | Luftfederbalg |
| 5 | Rahmen |
| 7 | Fahrzeugrad |
| 8 | Fahrbahn |
| 9 | Schwingungserreger |
| 10 | Sensor |
| $F_{L,B}$ | Feder |
| $F_R$ | Feder |
| $m_1$ | Masse |
| $m_2$ | Masse |
| $m_3$ | Masse |

### Patentansprüche

1.  Verfahren zur Feststellung der Gewichtsbelastung einer gegenüber dem Fahrzeugaufbau gefederten, luftbereiften Fahrzeugachse (1) unter Verwendung eines Sensors (10), aus dessen Signal das auf der Fahrzeugachse (1) lastende Gewicht rechnerisch ableitbar ist,
    **dadurch gekennzeichnet,**
    **daß** der Sensor (10) mit der Fahrzeugachse (1) verbunden ist und ein Geschwindigkeits- und/oder Beschleunigungssignal vertikal zur Fahrbahn (8) erfaßt, aus dem bei gemessener Schwingungsfrequenz der Fahrzeugachse (1) mit der Winkelgeschwindigkeit w die auf der Achse lastende Masse $m_2$ des Fahrzeugaufbaus einschließlich der Ladung nach der Formel

$$m_2 = \frac{c_R \cdot c_{L,B} - m_1 \cdot \omega^2 \cdot c_{L,B}}{\omega^2 (c_R + c_{L,B}) - m_1 \cdot \omega^4}$$

berechnet wird, worin bedeuten:

$m_2$    Achslast in kg

$m_1$    Masse in kg von Fahrzeugachse einschließlich fest damit verbundener Teile

$\omega$    Winkelgeschwindigkeit $2\,\pi\,f$ in 1/s des Schwingungserregers

$c_R$    Federkraft in N/mm der Luftbereifung

$c_{L,B}$    Federkraft in N/mm der Fahrzeugfederung zwischen Fahrzeugaufbau und Fahrzeugachse.

2. Verfahren nach Anspruch 1, **dadurch gekennzeichnet**, das die Schwingungserregung durch eine an der Fahrzeugachse (1) oder einem damit fest verbundenen Teil rotierende Erregermasse $m_3$ erfolgt.

3. Verfahren nach Anspruch 1 oder Anspruch 2, **dadurch gekennzeichnet, daß** sich jeweils ein Sensor (10) im Bereich jedes der beiden Enden der Fahrzeugachse (1) befindet, und daß jeder der Sensoren (10) unabhängig von dem jeweils anderen Sensor ein Geschwindigkeits- und/oder Beschleunigungssignal erfaßt.

**Claims**

1. Method of determining the weight loading of a tyred vehicle axle (1) which is sprung with respect to the vehicle body, using a sensor (10), from the signal of which sensor the weight load on vehicle axle (1) can be derived in a mathematical manner, said method being **characterized in that** the sensor (10) is connected to the vehicle axle (1) and detects a speed and/or acceleration signal vertical to the road (8), from which signal, at a measured vibration frequency of the vehicle axle (1) at the angular velocity $\omega$, the mass $m_2$ of the vehicle body on the axle, including the load, is calculated in accordance with the formula

$$m_2 = \frac{c_R \cdot c_{L,B} - m_1 \cdot \omega^2 \cdot c_{L,B}}{\omega^2 (c_R + c_{L,B}) - m_1 \cdot \omega^4}$$

in which:

$m_2$    is the axle load in kg

$m_1$    is the mass in kg of the vehicle axle including parts connected fixedly thereto

$\omega$    is the angular velocity $2\,\pi\,f$ in 1/s of the vibration exciter

$c_R$    is the elasticity in N/mm of the tyres

$c_{L,B}$    is the elasticity in N/mm of the vehicle suspension between vehicle body and vehicle axle.

2. Method according to Claim 1, **characterized in that** the vibration excitation takes place by virtue of an exciter mass $m_3$ which rotates on the vehicle axle (1) or on a part connected fixedly to the latter.

3. Method according to Claim 1 or Claim 2, **characterized in that** in each case one sensor (10) is located in the region of each of the two ends of the vehicle axle (1), and **in that** each of the sensors (10) detects a speed and/or acceleration signal independently of the respective other sensor.

**Revendications**

1. Procédé pour déterminer la charge de poids d'un essieu de véhicule (1) équipé de pneumatiques, suspendu par rapport à la carrosserie du véhicule, par utilisation d'un capteur (10) dont le signal permet de dériver par le calcul le poids pesant sur l'essieu (1) du véhicule, **caractérisé en ce que** le capteur (10) est relié à l'essieu (1) du véhicule et détecte un signal de vitesse et/ou d'accélération, verticalement par rapport à la chaussée (8), à partir duquel, lorsque la fréquence d'oscillations de l'essieu (1) est mesurée, on calcule avec la vitesse angulaire $\omega$ la masse $m_2$ pesant sur l'essieu de la carrosserie du véhicule, y compris la charge suivant la formule

$$m_2 = \frac{c_R \cdot c_{L,B} - m_1 \cdot \omega^2 \cdot c_{L,B}}{\omega^2 (c_R + c_{L,B}) - m_1 \cdot \omega^4}$$

dans laquelle :

$m_2$    charge sur l'essieu en kg

$m_1$    masse en kg de l'essieu du véhicule y compris les pièces reliées solidairement à celui-ci

$\omega$    vitesse angulaire $2\,\pi\,f$ en 1/s du générateur d'oscillations

$c_R$    force de ressort en N/mm des pneumatiques

$C_{L,B}$  force de ressort en N/mm de la suspension du véhicule entre sa carrosserie et son essieu.

2.  Procédé selon la revendication 1, **caractérisé en ce que** la génération d'oscillations s'effectue par une masse d'excitation $m_3$ tournante sur l'essieu (1) du véhicule ou un élément solidaire de celui-ci.

3.  Procédé selon la revendication 1 ou la revendication 2, **caractérisé en ce qu'**un capteur (10) se trouve dans la zone de chacune des deux extrémités de l'essieu (1) du véhicule, et **en ce que** chacun des capteurs (10) détecte un signal de vitesse et/ou un signal d'accélération indépendamment de l'autre capteur.

Fig. 1

Fig. 2